# FASCICULE DE BREVET EUROPEEN

(11) **EP 2 072 426 B1**
(45) Date de publication et mention de la délivrance du brevet: **01.04.2015**
(21) Numéro de dépôt: 08305970.9
(22) Date de dépôt: 18.12.2008
(51) Int. Cl.: B65G 47/14

(54) **Système à bol vibrant comportant une crosse de guidage et redressement d'objets orientés circulants**
Schwingtopf mit einem Kreuzkopf zum Lenken und Wiederaufrichten von im Umlauf befindlichen orientierten Objekten
Vibrating bowl comprising a crosshead for guiding and rectifying circulating oriented objects

(30) Priorité: 21.12.2007 FR 0760219
(43) Date de publication de la demande: 24.06.2009
(73) Titulaire: PKB, 27930 Angerville-La-Campagne (FR)
(72) Inventeur: Marault, Jean-Michel, 94240 L'Haÿ-les-Roses (FR)
(74) Mandataire: Michelet, Alain

(56) Documents cités:
- EP-A- 1 584 579
- EP-A- 1 690 813
- EP-A- 1 826 155
- FR-A- 1 319 085
- JP-A- 11 286 322
- US-A- 2 621 824
- US-A- 3 643 783
- US-A- 4 206 539
- US-A- 5 191 960

## Description

La présente invention concerne une crosse de guidage et redressement d'objets orientés circulants ainsi qu'une application sous forme d'un système à bol vibrant comportant une telle crosse. Elle a des applications dans le domaine industriel notamment du flaconnage médical, cosmétique ou de la parfumerie dans lequel des pompes de pulvérisation ou de distribution de dose ou autres éléments de forme équivalente doivent être placés dans des ouvertures de récipients.

On connaît déjà des dispositifs de triage et orientation à type de bols vibrants pour objets asymétriques ayant un centre de gravité décalé sur leur longueur comme des pompes de pulvérisateurs. On peut par exemple se référer à la demande FR06/50658 qui concerne un tel bol vibrant à sortie droite. Les objets alignés et orientés qui sortent du bol vibrant distribué en file sont destinés à être pris en charge par une unité d'aval qui comporte des moyens d'entraînement propres desdits objets. Cette unité aval est notamment une réglette destinée à convoyer et entraîner d'une manière contrôlée ou non selon son degré de sophistication, les objets vers une autre machine dans laquelle ils seront employés. Cette réglette, en général vibrante, convoie les objets qui sont orientés verticalement. Or les objets en sortie du bol vibrant sont généralement inclinés par rapport à la verticale et il est donc nécessaire de procéder à un changement d'orientation entre la sortie du bol vibrant et la réglette. Dans la demande FR06/50658, ce changement d'orientation est obtenu par une vrille de direction générale dans l'axe de sortie du bol (direction de déplacement des objets sur la sortie droite du bol vibrant) et dont l'orientation de guidage des objets passe progressivement lors de leur déplacement de l'inclinaison de sortie de bol à la verticale de l'entrée de la réglette.

On connaît également par EP-A-1 826 155 et EP-A-1 690 813 des dispositifs d'orientation et de convoyage.

Le but de l'invention est de proposer un dispositif alternatif qui permette une orientation des objets entre la sortie d'un bol vibrant où ils sont inclinés par rapport à la verticale et l'entrée d'une réglette où ils sont verticaux. Dans le dispositif proposé à type de crosse, il se produit un changement de la direction de déplacement des objets par une chute contrôlée qui permet une réalisation notamment plus compacte et plus reproductible d'un système fonctionnel à bol vibrant et réglette.

Ainsi, l'invention concerne un dispositif de guidage et redressement d'objets circulants entre une sortie de bol vibrant dans lequel les objets sont orientés et distribués les uns après les autres et une entrée d'un moyen de convoyage des objets, les objets étant allongés et asymétriques à centre de gravité décentré sur leur longueur avec une tête large se poursuivant par une queue étroite et allongée, notamment à type de pompe de pulvérisateur, de distribution de dose ou autre élément de forme équivalente, les objets se déplaçant dans le bol sur un chemin de guidage d'un support incliné par rapport à la verticale, le moyen de convoyage entraînant les objets orientés sensiblement verticalement, le chemin de guidage comportant au moins un moyen de guidage permettant de retenir par leurs têtes les objets circulants sur le support incliné.

Selon l'invention, le dispositif est une crosse de guidage et redressement allongée dans un plan de direction sensiblement perpendiculaire à la direction de déplacement des objets en sortie de bol, ladite crosse ayant une entrée disposée à la sortie du bol en limite du support sur le chemin de guidage et une sortie de crosse disposée en continuité du moyen de convoyage pour y transférer les objets, les objets étant au moins initialement entraînés par gravité (chute contrôlée des objets dans la crosse en sortie de bol) dans ladite crosse, ladite crosse ayant un moyen de guidage formé de deux semelles sensiblement parallèles, séparées par un espace libre dans lequel la queue de l'objet peut circuler, la tête de l'objet glissant sur la face supérieure desdites deux semelles.

Dans divers modes de mise en oeuvre de cette invention, les moyens suivants pouvant être utilisés seuls ou selon toutes les combinaisons techniquement possibles, sont employés :
- les deux semelles sont dans un plan droit,
- les deux semelles sont dans un plan courbé,
- les objets ont une tête homogène, (sans sillon),
- les objets ont une tête complexe, (avec au moins un sillon),
- la sortie de bol est droite et les objets s'y déplacent dans une direction sensiblement parallèle à une tangente dudit bol,
- la sortie de crosse est à une hauteur inférieure de celle du support,
- les deux semelles sensiblement parallèles sont dans un même plan courbé,
- la crosse comporte au moins une paroi latérale, (les objets circulent entre ces deux parois latérales),
- la crosse comporte deux parois latérales,
- l'espace libre est élargi vers l'entrée de la crosse afin de former un entonnoir de passage de queue d'objet,
- les semelles sont en en continuité du moyen de guidage du chemin de guidage,
- le moyen de guidage du chemin de guidage du bol vibrant est un rail,
- les semelles au niveau de l'entrée de crosse sont dans le plan du rail, la semelle la plus proche du bol étant en continuité dudit rail,
- les semelles sont décalées par rapport au moyen de guidage,
- la tête est divisée en deux portions par une partie rétrécie formant un sillon et la crosse est configurée pour que les semelles soient au niveau dudit sillon, les objets étant retenus dans leur trajet dans la crosse par la portion supérieure de leur tête glissant sur les semelles,
   (par exemple la portion supérieure de tête = poussoir et la portion inférieure de tête = collerette de fixation à un récipient, et dans ce cas, au lieu que les objets soient retenus par glissement de la collerette sur les semelles, les objets sont retenus par glissement du poussoir sur les semelles)
- la crosse comporte des moyens de fixation au moyen de convoyage, la crosse n'étant pas fixée au bol vibrant,
- la crosse comporte des moyens de fixation au bol vibrant, la crosse n'étant pas fixée au moyen de convoyage,
- la crosse comporte des moyens de fixation au moyen de convoyage et la crosse comporte des moyens de fixation au bol vibrant,
- la crosse comporte à son entrée une glissière de queue disposée pour être au dessus au moins de la queue des objets et étendue sur la sortie du bol et au dessus d'une partie du support, ladite glissière de queue étant destinée à empêcher que la queue de l'objet ne se redresse vers le haut lorsque ledit objet passe dans l'entrée de crosse, (empêche que l'objet ne tombe la tête la première dans l'entrée de la crosse),
- la glissière de queue est configurée pour servir de support à une partie de face inférieure de tête d'objet, (lors de leur déplacement sur le support du bol),
- la glissière de queue est configurée pour servir de guide à une partie rétrécie (sillon) de tête d'objet, (équivalent d'un rail de support mais disposé sur la glissière de queue)
- la glissière de queue est escamotable,
- la glissière de queue est réglable en hauteur par rapport au support, (pour régler l'écartement entre le support et la glissière de queue)
- la glissière de queue est interchangeable pour s'adapter à la forme de la tête,
- la crosse comporte au moins une glissière de tête comportant au moins une lame de glissière de tête, ladite lame étant sur au moins une partie de son trajet sensiblement parallèle aux semelles, ladite glissière de tête étant conçue pour éviter le basculement tête la première de l'objet lors de son introduction dans la crosse et au cour de son déplacement dans la crosse, (selon les cas, soit la lame est au dessus de la tête et la face supérieure de la tête peut glisser sur la lame de glissière de tête, soit la lame est au niveau d'un sillon de la tête car la tête divisée en deux portions par une partie rétrécie formant un sillon : par exemple la portion supérieure de tête = poussoir et la portion inférieure de tête = collerette de fixation à un récipient)
- la glissière de tête est fixée sur une des parois latérales de la crosse,
- la crosse comporte deux glissières de tête, une sur chacune de ses deux parois latérales (disposées symétriquement de préférence ou décalées si une lame est au dessus de la tête et l'autre lame dans le sillon),
- la tête est divisée en deux portions par une partie rétrécie formant un sillon et la lame de la glissière de tête guide la tête par son sillon, ladite lame étant étendue depuis l'entrée de la crosse sur au moins une partie de ladite crosse en direction de la sortie de la crosse, ladite lame étant sur au moins une partie de son trajet sensiblement parallèle aux semelles, ladite lame de glissière de tête étant destinée à empêcher que l'objet ne tombe la tête la première dans la crosse, (en particulier dans la partie la plus pentue de la crosse et la crosse est donc configurée pour que la lame de la glissière de tête soit au niveau du sillon)
- la crosse comporte une glissière de tête disposée pour que sa lame de glissière de tête soit au dessus de la tête des objets et étendue depuis l'entrée de la crosse sur au moins une partie de ladite crosse en direction de la sortie de la crosse, ladite glissière étant sur au moins une partie de son trajet sensiblement parallèle aux semelles, ladite glissière de tête étant destinée à empêcher que l'objet ne tombe la tête la première dans la crosse (en particulier dans la partie la plus pentue de la crosse et la crosse est donc configurée pour que la lame de la glissière de tête soit au dessus de la tête),
- la glissière de tête comporte deux lames de glissière de tête parallèles entre-elles, la lame la plus haute est au dessus de la tête des objets et la lame la plus basse au niveau du sillon de la tête ;
- la glissière de tête est interchangeable afin de pouvoir adapter la crosse à une nouvelle forme de tête de pompe, (la glissière de tête est interchangeable pour s'adapter à la forme de la tête)
- la glissière de tête est réglable en position pour régler la distance entre la semelle et la lame de glissière de tête,
- la glissière de tête est usinée dans la masse,
- la distance entre la lame de la glissière de tête et les semelles est supérieure vers l'entrée de crosse afin de former un entonnoir destiné à recevoir les têtes des objets,
- la glissière de tête est escamotable afin de pouvoir donner accès à l'intérieur de la crosse,
- en outre la crosse est incurvée latéralement afin que la sortie de crosse soit dans une direction différente de celle de l'entrée de crosse, (permet d'autres directions du moyen de convoyage que celle sensiblement perpendiculaire à la direction de déplacement des objets en sortie de bol sur le support).

L'invention concerne également un système à bol vibrant et moyen de convoyage, tel qu'il comporte entre ledit bol vibrant et ledit moyen de convoyage un dispositif à type de crosse selon l'une ou plusieurs quelconque(s) des caractéristiques décrites. Dans un mode particulier, le moyen de convoyage est une réglette fixée sur un rail vibrant.

La présente invention va maintenant être décrite en référence aux dessins annexés, qui illustrent un exemple de réalisation non limitatif et dans lesquels :
La Figure 1 représente une vue perspective d'un système à bol vibrant et moyen de convoyage avec, entre les deux, une crosse selon l'invention,
la Figure 2 représente une vue de dessus de la sortie droite d'un bol vibrant dans sa relation avec une crosse selon l'invention,

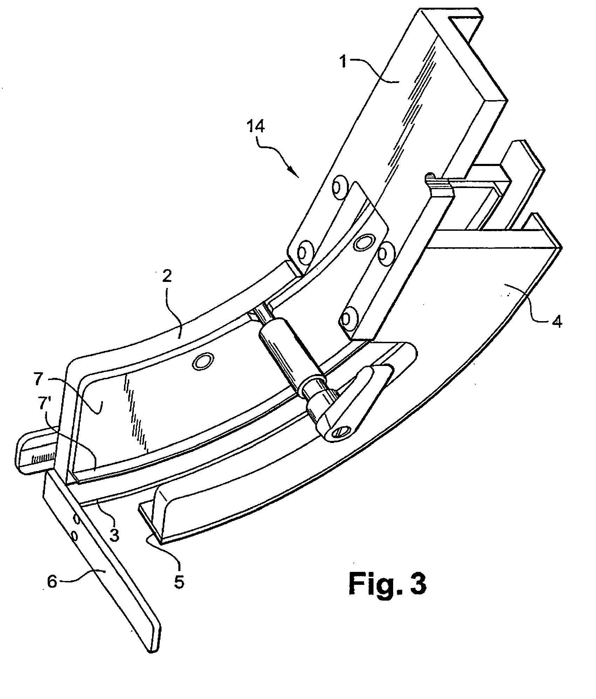

la Figure 3 représente une vue perspective d'une crosse selon l'invention,
la Figure 4 représente une autre vue perspective de la crosse de la Figure 3,
la Figure 5 représente une vue perspective simplifiée dans laquelle une lame de glissière de tête est disposée pour être au-dessus de la tête des objets, et
la Figure 6 représente une perspective simplifiée dans laquelle une lame de glissière de tête est disposée pour être au niveau des sillons des têtes des objets.

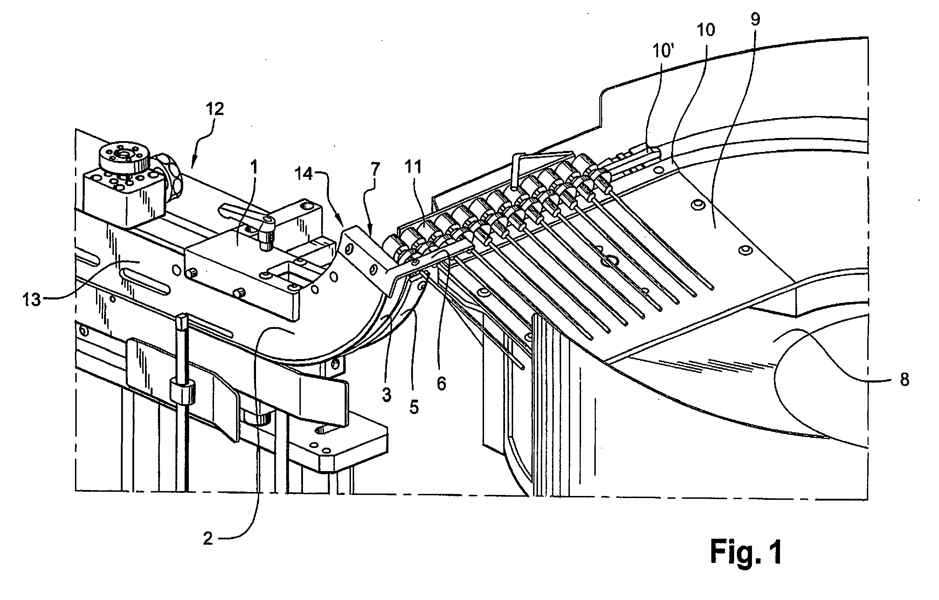

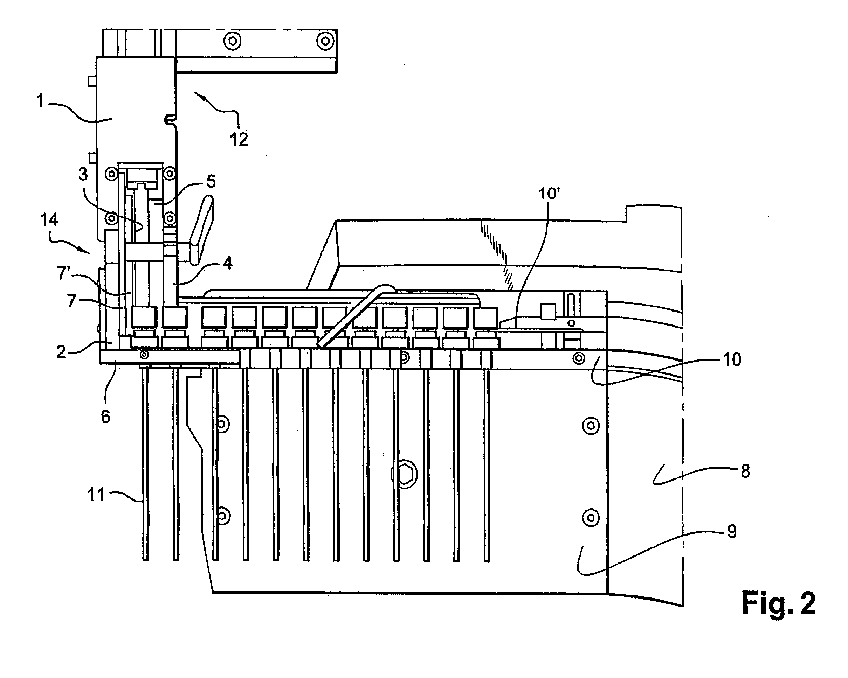

Sur la Figure 1, un bol vibrant 8 à sortie droite est représenté sur la partie droite de la figure et un moyen de convoyage 12 sur la partie gauche de la figure, une crosse 14 étant disposée entre les deux. Les objets qui sont orientés et distribués par le bol vibrant 8 sont des pompes 11 pour pulvérisateurs notamment de parfum. Ces pompes ont une tête de plus grand diamètre et plus faible hauteur que leur queue et leur centre de gravité est décalé vers la tête par rapport à la moitié de leur hauteur (longueur) totale. La tête est dans cet exemple segmentée en deux parties (un poussoir en haut et une collerette de sertissage en bas) séparées par un sillon de plus faible diamètre. En sortie du bol vibrant, les objets sont alignés sur un support 9 incliné et ils se déplacent le long d'un chemin de guidage rectiligne de direction sensiblement parallèle à une tangente du bol vibrant. Les objets correctement orientés sont retenus sur le support 9 par un moyen de guidage formé ici de deux rails 10 et 10'. Un premier rail 10 retient les objets par la face inférieure de leur tête et peut suffire à lui seul à la fonction d'orientation du bol vibrant. Toutefois, dans cet exemple, la tête des objets ayant un sillon, un second rail 10' est mis en oeuvre pour ce type d'objet sur au moins une partie du chemin de guidage sur le support, le second rail venant dans le sillon de la tête. Une ouverture dans le support (mieux visible sur la Figure 2) peut être prévue pour que des objets mal orientés d'une certaine façon puissent retomber dans le fond du bol. D'autres moyens d'élimination des objets mal orientés et visible sur les Figures ne sont pas décrits en détail dans la suite.

Sur les Figures, la crosse 14 comporte essentiellement deux parois latérales gauche 2 et droite 4 et deux semelles de glissement, semelle de glissement gauche 3 et semelle de glissement droite 5 séparées par un espace, et destinées à supporter les têtes des objets par une partie inférieure de ces têtes, les queues passant entre les semelles dans l'espace. Les semelles qui sont dans un même plan incurvé et qui sont sensiblement parallèles sont donc bordées de chaque coté par une paroi latérale gauche 2 et une paroi latérale droite 4. La crosse est fixée sur une réglette 13 du moyen de convoyage 12 vibrant grâce à un support 1 de crosse. L'entrée de la crosse qui forme une ouverture vers le haut est en sortie du chemin de guidage de sortie de bol et les objets y passent par gravité. Afin d'améliorer le passage entre la sortie de bol et l'entrée de crosse, par exemple pour s'assurer que les objets ne tombent pas la tête la première dans la crosse, on peut mettre en oeuvre des moyens supplémentaires optionnels, alternatifs ou combinés, à type de glissière de tête 7 et/ou de glissière de queue 6.

Dans cet exemple, les semelles de glissement 3 et 5 de la crosse 14 sont dans le prolongement du rail 10. La crosse comporte une glissière de tête 7 de forme en L appliquée par sa partie verticale contre une des parois latérale, la 2 en l'espèce. La partie horizontale de la glissière de tête est orientée vers l'intérieur de la crosse et forme une lame de glissement de tête 7'. La lame de glissement de tête 7' se trouve dans le prolongement du second rail 10'. Une poignée de mise en position et fixation de la glissière de tête 7 est visible sur les Figures. La glissière de tête 7 est interchangeable et, dans une variante non représentée, la glissière de tête 7 peut être réglée en position/hauteur pour régler la distance entre les semelles de glissement, notamment 3, et la lame de glissement de tête 7'.

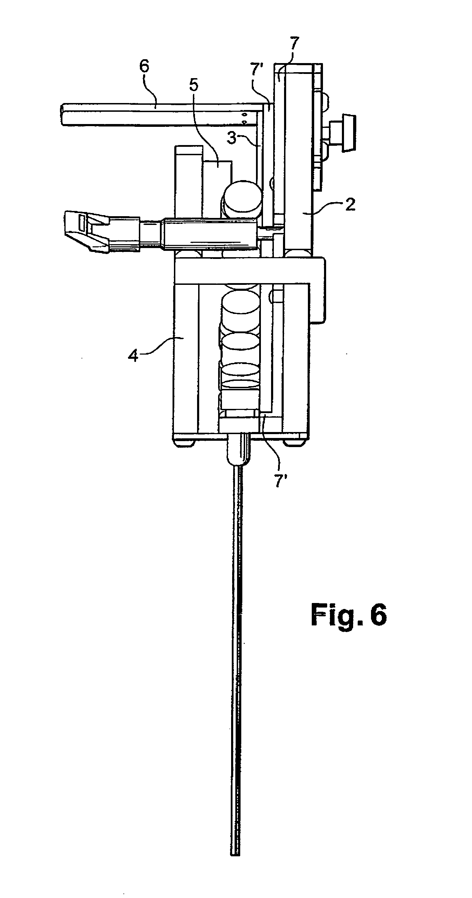

Dans la configuration représentée, la collerette des objets est prise et glisse entre la semelle de glissement 3 et la lame de glissement de tête 7'. Cette configuration est encore mieux visible sur la Figure 6. En effet, la lame 7' de la glissière de tête 7 est sensiblement parallèle et à distance des semelles 3, 5, distance qui correspond sensiblement à la hauteur (+ jeu pour éviter un blocage/serrage) entre la partie supérieure de la collerette et la partie inférieure de la collerette. La glissière de tête 7 avec sa lame 7' peut être étendue depuis l'ouverture de crosse jusqu'à la sortie de crosse côté moyen de convoyage 12 ou s'arrêter avant. Dans une variante, la glissière de tête 7 à l'entrée de crosse peut avoir une forme évasée en entonnoir pour faciliter la réception des objets.

On comprend que de nombreuses autres variantes sont possibles notamment en fonction de la structure de la tête des objets (existence ou non d'un sillon), de la position de la glissière de tête, la largeur de la lame de glissement de tête, de l'existence éventuelle d'une seconde glissière de tête disposée symétriquement sur l'autre paroi latérale (4 en l'espèce), de l'installation de l'unique glissière de tête sur l'autre paroi latérale (4 en l'espèce au lieu de la 2), de la disposition relative entre les semelles et le/les rails du support, de la disposition relative entre la/les lames 7' de glissement de tête et le/les rails du support. Dans ces cas, l'invention permet une adaptation/reconfiguration aisée de la crosse au type d'objet à traiter grâce aux possibilités de réglage ou de changement des éléments de la crosse. A cette fin, les éléments de la crosse, notamment semelles et glissières peuvent être rendus interchangeables et/ou réglables dans leurs dispositions relatives afin de pouvoir adapter la crosse à divers types d'objets et de bol.

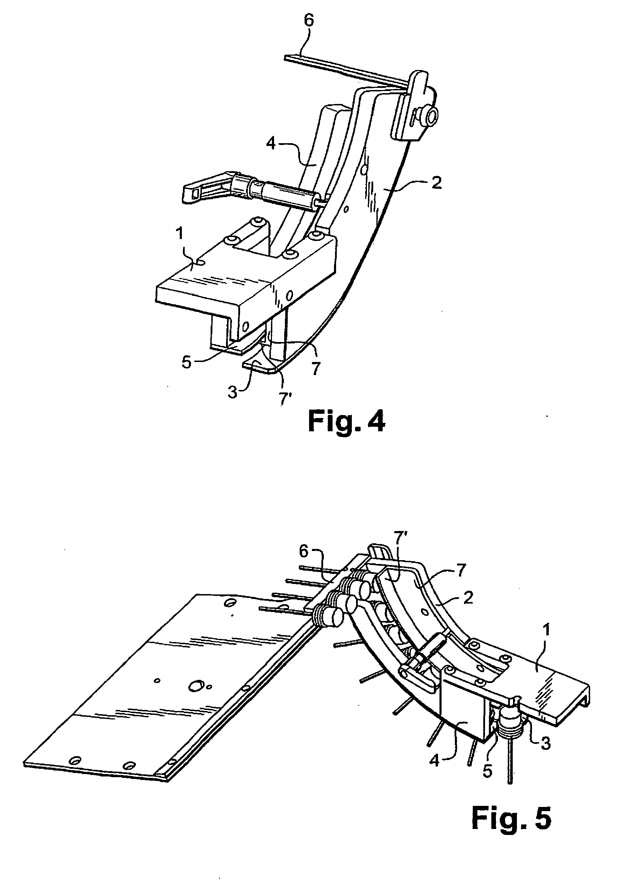

Par exemple, dans une première variante (non représentée), les semelles peuvent être en continuité du rail 10' et les objets sont donc retenus dans la crosse par le sillon de leur tête et, alors, de préférence, la glissière de tête est configurée (largeur de la lame de glissement de tête 7' suffisante) et positionnée sur la paroi latérale de façon à ce que le sommet de la tête de l'objet passe dessous (et la tête soit retenue par ladite lame de glissement de tête 7'). Dans le cas d'objets ayant une tête avec sillon, les semelles peuvent être décalées par rapport au rail pour reprendre les objets par une partie inférieure de tête (sillon ou tête dans sa globalité) différente de celle de retenue par le rail du support du bol. Toutes les combinaisons ou possibilités de reprise sont possibles et on a représenté à titre d'exemple sur la Figure 5, le cas où la bague 7' de la glissière de tête 7 est configurée pour être au-dessus de la tête des objets pour les maintenir lors de leur trajet dans la crosse.

La glissière de queue 6 est un doigt (ou une plaque) qui s'étend au dessus du chemin de guidage du support au moins au dessus des queues des objets afin d'empêcher que la queue ne bascule vers le haut. Dans la modalité de réalisation représentée sur les Figures, cette glissière de queue est en outre configurée pour retenir/supporter une partie de la face inférieure de la collerette de la tête des objets et elle est donc sensiblement dans l'axe et plan du premier rail 10 dans cet exemple. Dans une variante, la glissière de queue est amovible et interchangeable pour pouvoir s'adapter à une autre forme de pompe. De préférence, la glissière de queue 6 est, comme représentée, réglable en hauteur (réglage de la distance entre le support de sortie de bol et la face inférieure de ladite glissière de queue).

La réglette 13 peut être multi format ou mono format. La crosse 14 est fixée par un support 1 à la réglette 13 et elle est positionnée à 90° par rapport à la direction du chemin de guidage de la sortie du bol vibrant 8 et de sa cuve de distribution. La crosse est ainsi disposée en sortie du bol vibrant et est fixée sur la réglette. De préférence, la réglette, la crosse et ses éléments sont interchangeables en fonction des objets distribués. Sur les Figures, les objets, pompes en l'espèce, distribués en sortie de bol vibrant sont maintenus et guidés lors de leur chute dans la crosse par les glissières de queue 6 et de tête 7 et guidés par les semelles 3 et 5. Comme on l'a vu, en fonction des caractéristiques des objets distribués (notamment forme/structure des têtes), les semelles 3 et 5 peuvent maintenir les objets par le dessous de la collerette ou le dessous du bouton poussoir. Il en est de même pour la glissière de queue 6 qui peut, en outre d'empêcher le basculement des queues vers le haut, maintenir les objets par le dessous de la collerette ou le dessous du bouton poussoir (dans ce dernier cas, elle s'apparente dans la zone du sillon, à un rail équivalent de celui du support mais disposé au-dessus des objets).

On comprend que le principe général de l'invention exemplifié avec un type d'objet particulier, peut être adapté directement à d'autres types d'objets sans pour autant sortir du cadre général de la définition de l'invention. Outre les diverses relations possibles entre le/les rails du bol et les semelles (paire de semelles) et le/les glissières, dans des variantes d'autres structures de semelles et glissières (notamment lame(s) de glissière(s) de tête) sont mises en oeuvre dans des éléments communs (de préférence permettant un réglage entre les deux) ou distincts de la crosse. De plus, l'invention est adaptée à tout type de bol, à sortie droite ou non.

## Revendications

1. Système comportant un bol vibrant (8) amont et un dispositif de redressement et de guidage d'objets (11), les objets circulants dans ledit dispositif de redressement et de guidage d'objets (11) provenant d'une sortie du bol vibrant (8) dans lequel les objets sont orientés et distribués les uns après les autres, les objets étant allongés et asymétriques à centre de gravité décentré sur leur longueur avec une tête large se poursuivant par une queue étroite et allongée, notamment à type de pompe de pulvérisateur, de distribution de dose ou autre élément de forme équivalente, les objets se déplaçant dans le bol vibrant vers la sortie dudit bol sur un chemin de guidage d'un support (9) incliné par rapport à la verticale, les objets étant supportés par leur tranche sur ledit support (9), le chemin de guidage comportant au moins un moyen de guidage (10, 10') permettant de retenir par leurs têtes les objets circulants sur le support incliné, les objets se déplaçant sur le support (9) ayant une orientation générale perpendiculaire par rapport à leur direction de déplacement en ayant leur tête orientée vers la périphérie dudit bol vibrant et leur queue orientée vers l'intérieur dudit bol vibrant, les objets en sortie du dispositif de redressement et de guidage d'objets (11) étant orientés verticalement avec leur tête vers le haut et leur queue vers le bas,
**caractérisé en ce que** le dispositif de redressement et de guidage est une crosse (14) de redressement et de guidage allongée dans un plan de direction perpendiculaire à la direction de déplacement des objets (11) en sortie de bol vibrant (8), afin que les directions de déplacement des objets (11) entre la sortie du bol vibrant (8) et l'entrée de la crosse (14) soient perpendiculaires entre elles, ledit changement de direction de déplacement ayant lieu à l'instant où l'objet quitte la sortie du bol vibrant en chutant dans l'entrée de la crosse (14), ladite crosse ayant une entrée de crosse (14) disposée à la sortie du bol vibrant, en limite du support (9) sur le chemin de guidage les objets (11) chutant dans ladite crosse étant au moins initialement entraînés par gravité dans ladite crosse, ladite crosse ayant un moyen de guidage formé de deux semelles (3, 5) parallèles séparées par un espace libre dans lequel la queue de l'objet peut circuler, la tête de l'objet glissant sur la face supérieure desdites deux semelles.

2. Système selon la revendication 1, **caractérisé en ce que** la crosse (14) comporte à son entrée une glissière de queue (6) disposée pour être au-dessus au moins de la queue des objets (11) et étendue sur la sortie du bol et au-dessus d'une partie du support (9), ladite glissière de queue (6) étant destinée à empêcher que la queue de l'objet ne se redresse vers le haut lorsque ledit objet passe en chutant dans l'entrée de crosse.

3. Système selon la revendication 2, **caractérisé en ce que** la glissière de queue (6) est escamotable.

4. Système selon la revendication 1, 2 ou 3, **caractérisé en ce que** la crosse (14) comporte au moins une glissière de tête (7) comportant au moins une lame (7') de glissière de tête, ladite lame étant sur au moins une partie de son trajet parallèle aux semelles, ladite glissière de tête étant conçue pour éviter le basculement tête la première de l'objet (11) lorsque ledit objet passe en chutant dans l'entrée de crosse (14) et au cours de son déplacement dans la crosse (14).

5. Système selon la revendication 4, **caractérisé en ce que** la glissière de tête (7) est interchangeable afin de pouvoir adapter la crosse (14) à une nouvelle forme de tête d'objet (11).

6. Système selon la revendication 4 ou 5, **caractérisé en ce que** la glissière de tête (7) est réglable en hauteur par rapport aux semelles (3, 5).

7. Système selon l'une quelconque des revendications précédentes, **caractérisé en ce que** la crosse (14) comporte deux parois latérales (2,4).

8. Système selon l'une quelconque des revendications précédentes, **caractérisé en ce que** la crosse (14) est vibratoirement indépendante du bol vibrant, la crosse n'étant pas fixée au bol vibrant.

9. Système selon l'une quelconque des revendications précédentes, **caractérisé en ce qu'**il comporte en outre un moyen de convoyage vibrant (12) aval, la crosse (14) étant disposée entre le bol vibrant (8) amont et ledit moyen de convoyage vibrant (12) aval, et **en ce que** la crosse (14) a sa sortie disposée en continuité et solidaire du moyen de convoyage vibrant (12) aval pour y transférer les objets (11), la crosse (14) comportant des moyens de fixation (1) au moyen de convoyage vibrant (12) aval.

10. Système selon la revendication 9, **caractérisé en ce que** le moyen de convoyage aval (12) est une réglette fixée sur un rail vibrant.

11. Système selon l'une quelconque des revendications précédentes, **caractérisé en ce que** la sortie du bol est une sortie droite.

12. Crosse (14) spécialement adaptée au système de l'une quelconque des revendications précédentes, **caractérisée en ce qu'**elle est allongée dans un plan destiné à être de direction perpendiculaire à la direction de déplacement d'objets en sortie d'un bol vibrant (8), afin que les directions de déplacement des objets (11) entre la sortie du bol vibrant (8) et l'entrée de la crosse (14) soient perpendiculaires entre elles, ladite crosse ayant une entrée destinée à être disposée à la sortie du bol vibrant, les objets (11) chutant dans ladite crosse étant au moins initialement entraînés par gravité dans ladite crosse, ladite crosse ayant un moyen de guidage formé de deux semelles (3, 5) parallèles séparées par un espace libre dans lequel la queue de l'objet (11) peut circuler, la tête de l'objet (11) glissant sur la face supérieure desdites deux semelles et **en ce que** la crosse (14) comporte au moins une glissière de tête (7) comportant au moins une lame (7') de glissière de tête (7), ladite lame étant sur au moins une partie de son trajet parallèle aux semelles.

13. Crosse (14) selon la revendication 12, **caractérisée en ce qu'**elle comporte deux parois latérales (2,4).

14. Crosse (14) selon la revendication 12 ou 13, **caractérisée en ce qu'**elle est en outre destinée à être disposée en continuité et solidaire d'un moyen de convoyage vibrant (12) aval pour y transférer les objets (11), la crosse (14) comportant des moyens de fixation (1) au moyen de convoyage vibrant (12) aval.

## Patentansprüche

1. System mit einem vorgeordneten Schwingförderer (8) und einer Vorrichtung zum Wiederaufrichten und Leiten von Gegenständen (11), wobei die Gegenstände, die in der Vorrichtung zum Wiederaufrichten und Leiten von Gegenständen (11) umlaufen, von einem Ausgang des Schwingfördereres (8) kommen, in dem die Gegenstände ausgerichtet und einer nach dem anderen ausgegeben werden, wobei die Gegenstände langgestreckt und asymmetrisch sind und in Bezug auf deren Länge einen dezentralen Schwerpunkt aufweisen sowie einen breiten Kopf mit anschliessendem schmalen und langgesteckten Endteil, insbesondere vom Typ einer Zerstäuberpumpe, einer Dosierpumpe oder eines anderen Elements äquivalenter Form aufweisen, wobei sich die im Schwingförderer umlaufenden Gegenstände zum Ausgang hin auf einem Leitweg einer gegenüber der Vertikalen geneigten Rampe bewegen, wobei die Gegenstände mit deren Seitenfläche auf der Rampe (9) aufliegen, wobei der Leitweg wenigstens ein Leitmittel (10, 10') aufweist, das ermöglicht, die sich auf der schrägen Rampe bewegenden Gegenstände an deren Kopf festzuhalten, wobei die sich auf dem Leitweg bewegenden Gegenstände im wesentlichen senkrecht zu deren Bewegungsrichtung ausgerichtet sind und dabei deren Kopf zum Umfang des Schwingfördereres hin und deren Endteil ins Innere des Schwingfördereres gerichtet ist, wobei die Gegenstände am Ausgang der Vorrichtung (11) zum Wiederaufrichten und Leiten vertikal mit dem Kopf nach oben und dem Endteil nach unten ausgerichtet sind,
**dadurch gekennzeichnet, dass** die Vorrichtung zum Wiederaufrichten und Leiten ein langgestreckter, in einer zur Bewegungsrichtung der Gegenstände (11) am Ausgang des Schwingfördereres (8) senkrechten Ebene liegender Bogen zum Wiederaufrichten und Leiten ist, damit die Bewegungsrichtungen der Gegenstände (11) zwischen dem Ausgang des Schwingfördereres (8) und dem Bogeneingang (14) zueinander senkrecht sind, wobei die Änderung der Bewegungsrichtung in dem Moment stattfindet, wenn der Gegenstand den Ausgang des Schwingfördereres verlässt und in den Eingang des Bogens fällt, wobei der Bogen einen am Ausgang des Schwingfördereres angeordneten Bogeneingang (14) aufweist, wobei die in den Bogen fallenden Gegenstände (11) wenigsten am Anfang durch die Schwerkraft in dem Bogen bewegt werden, wobei der Bogen ein Leitelement aufweist, das aus zwei zueinander parallelen Schultern (3, 5) gebildet ist, die voneinander durch einen Freiraum getrennt sind, in dem sich der Endteil des Gegenstands bewegen kann, wobei der Kopf auf der oberen Seite der beiden Schultern gleitet.

2. System gemäss Anspruch 1, **dadurch gekennzeichnet, dass** der Bogen (14) an seinem Eingang eine Endteilführung (6) aufweist, die derart angeordnet ist, dass sie sich wenigstens oberhalb der Endteile der Gegenstände (11) befindet und sich auf den Ausgang des Schwingförderers und oberhalb eines Teils der Rampe (9) erstreckt, wobei die Endteilführung (6) dazu bestimmt ist, zu verhindern, dass sich der Endteil der Gegenstände nach oben aufrichtet, wenn der Gegenstand in den Bogeneingang fällt.

3. System gemäss Anspruch 2, **dadurch gekennzeichnet, dass** die Endteilführung (6) einziehbar ist.

4. System gemäss Anspruch 1, 2 oder 3, **dadurch gekennzeichnet, dass** der Bogen (14) wenigstens eine Kopfführung (7) mit einem Führungsblatt (7') aufweist, wobei das Führungsblatt wenigstens auf einem Teil seiner Erstreckung zu den Schultern parallel verläuft, wobei die Kopfführung dazu bestimmt ist, das Kippen des Gegenstands (11) mit dem Kopf voraus zu verhindern, wenn der Gegenstand in den Eingang des Bogens (14) fällt und während seiner Bewegung im Bogen (14).

5. System gemäss Anspruch 4, **dadurch gekennzeichnet, dass** die Kopfführung (7) austauschbar ist, um den Bogen (14) an eine neue Kopfform des Gegenstands (11) anzupassen.

6. System gemäss Anspruch 4 oder 5, **dadurch gekennzeichnet, dass** die Kopfführung (7) in der Höhe in Bezug auf die Schultern (3,5) einstellbar ist.

7. System gemäss einem der vorangehenden Ansprüche, **dadurch gekennzeichnet, dass** der Bogen (14) zwei Seitenwände (2, 4) aufweist.

8. System gemäss einem der vorangehenden Ansprüche, **dadurch gekennzeichnet, dass** der Bogen (14) schwingungsmässig vom Schwingförderer unabhängig ist, wobei der Bogen nicht am Schwingförderer befestigt ist.

9. System gemäss einem der vorangehenden Ansprüche, **dadurch gekennzeichnet, dass** es ausserdem ein nachgeordnetes schwingendes Fördermittel (12) aufweist, wobei der Bogen (14) zwischen dem vorgeordneten Schwingförderer (8) und dem nachgeordneten schwingenden Fördermittel (12) angeordnet ist, und dass der Ausgang des Bogens (14) in Fortführung des nachgeordneten schwingenden Fördermittels (12) und mit diesem fest verbunden angeordnet ist, um die Gegenstände (11) dorthin weiterzuleiten, wobei der Bogen (14) Befestigungsmittel (1) zum Befestigen am nachgeordneten schwingenden Fördermittel (12) aufweist.

10. System gemäss Anspruch 9, **dadurch gekennzeichnet, dass** das nachgeordnete Fördermittel (12) eine auf einem schwingenden Profil befestigte Schiene ist.

11. System gemäss einem der vorangehenden Ansprüche, **dadurch gekennzeichnet, dass** der Ausgang des Schwingförderers ein gerader Ausgang ist.

12. Bogen (14), der speziell an das System nach einem der vorangehenden Ansprüche angepasst ist, **dadurch gekennzeichnet, dass** er sich in einer Ebene erstreckt, die zur Bewegungsrichtung der Gegenstände am Ausgang eines Schwingförderers (8) senkrecht ist, damit die Bewegungsrichtungen der Gegenstände (11) zwischen dem Ausgang des Schwingfördereres (8) und dem Bogeneingang (14) zueinander senkrecht sind, wobei der Bogen einen Eingang aufweist, der dazu bestimmt ist, am Ausgang des Schwingförderers angeordnet zu sein, wobei die in den Bogen fallenden Gegenstände (11) wenigsten am Anfang durch die Schwerkraft in dem Bogen bewegt werden, wobei der Bogen ein Leitelement aufweist, das aus zwei zueinander parallelen Schultern (3, 5) gebildet ist, die voneinander durch einen Freiraum getrennt sind, in dem sich der Endteil des Gegenstands bewegen kann, wobei der Kopf auf der oberen Seite der beiden Schultern gleitet, und dass der Bogen (14) wenigstens eine Kopfführung (7) mit einem Führungsblatt (7') aufweist, wobei das Führungsblatt wenigstens auf einem Teil seiner Erstreckung zu den Schultern parallel verläuft.

13. Bogen (14) nach Anspruch 12, **dadurch gekennzeichnet, dass** er zwei Seitenwände (2, 4) aufweist.

14. Bogen nach Anspruch 12 oder 13, **dadurch gekennzeichnet, dass** er ausserdem dazu bestimmt ist, in Fortführung des nachgeordneten schwingenden Fördermittels (12) und mit diesem fest verbunden angeordnet zu sein, um die Gegenstände (11) dorthin weiterzuleiten, wobei der Bogen (14) Befestigungsmittel (1) zum Befestigen am nachgeordneten schwingenden Fördermittel (12) aufweist.

## Claims

1. A system including an upstream vibratory bowl (8) and an object straightening and guiding device (11), the objects circulating in said object straightening and guiding device (11) coming from an outlet of the vibratory bowl (8) in which the objects are oriented and delivered one after the other, the objects being elongated and asymmetric with an offset gravity centre over their length with a wide head extended by a narrow and elongated tail, in particular of the type sprayer pump, pump for the delivery of a dose or another element of equivalent form, the objects moving in the vibratory bowl towards the outlet of said bowl on a guiding path of a support (9) inclined with respect to the vertical, the objects being supported by their edge on said support (9), the guiding path including at least one guiding means (10, 10') allowing to retain by their heads the objects circulating on the inclined support, the objects moving on the support (9) having a general orientation perpendicular with respect to their direction of move with their head oriented towards the periphery of said vibratory bowl and their tail oriented towards the inside of said vibratory bowl, the objects at the outlet of the object straightening and guiding device (11) being oriented vertically with their head upward and their tail downward,
**characterized in that** the straightening and guiding device is a straightening and guiding crosshead (14) elongated in a plane of direction perpendicular to the direction of move of the objects (11) at the outlet of the vibratory bowl (8), so that the directions of move of the objects (11) between the outlet of the vibratory bowl (8) and the inlet of the crosshead (14) are perpendicular to each other, said change of direction of move occurring at the time when the object leaves the outlet of the vibratory bowl by falling down into the inlet of the crosshead (14), said crosshead having an inlet of crosshead (14) arranged at the outlet of the vibratory bowl, at the limit of the support (9) on the guiding path, the objects (11) falling down into said crosshead being at least initially led by gravity into said crosshead, said crosshead having a guiding means formed of two parallel flanges (3, 5) separated by a free space in which the tail of the object can circulate, the head of the object sliding on the upper face of said two flanges.

2. The system according to claim 1, **characterized in that** the crosshead (14) includes at its inlet a tail slide (6) arranged so as to be above at least the tail of the objects (11) and extended over the outlet of the bowl and above one part of the support (9), said tail slide (6) being intended to prevent that the tail of the object is straighten upward when said object passes and falls down into the crosshead inlet.

3. The system according to claim 2, **characterized in that** the tail slide (6) is retractable.

4. The system according to claim 1, 2, or 3, **characterized in that** the crosshead (14) includes at least one head slide (7) including at least one blade (7') of head slide, said blade being over at least one part of its path parallel to the flanges, said head slide being adapted to avoid the tilting of the object (11) head first when said object passes and falls down into the inlet of the crosshead (14) and during its move in the crosshead (14).

5. The system according to claim 4, **characterized in that** the head slide (7) is interchangeable so as to be able to adapt the crosshead (14) to a new shape of head of object (11).

6. The system according to claim 4 or 5, **characterized in that** the head slide (7) is adjustable in height with respect to the flanges (3, 5).

7. The system according to any one of the preceding claims, **characterized in that** the crosshead (14) includes two lateral walls (2, 4).

8. The system according to any one of the preceding claims, **characterized in that** the crosshead (14) is vibratorily independent of the vibratory bowl, the crosshead being not fixed to the vibratory bowl.

9. The system according to any one of the preceding claims, **characterized in that** it further includes a downstream vibratory conveyor means (12), the crosshead (14) being arranged between the upstream vibratory bowl (8) and said downstream vibratory conveyor means (12), and **in that** the crosshead (14) has its outlet arranged in the continuity of and integral with the downstream vibratory conveyor means (12) to transfer thereto the objects (11), the crosshead (14) including means (1) for the fixation to the downstream vibratory conveyor means (12).

10. The system according to claim 9, **characterized in that** the downstream conveyor means (12) is a strip fixed on a vibratory rail.

11. The system according to any one of the preceding claims, **characterized in that** the outlet of the bowl is a straight outlet.

12. A crosshead (14) especially adapted to the system of any one of the preceding claims, **characterized in that** it is elongated in a plane intended to be of direction perpendicular to the direction of move of objects at the outlet of the vibratory bowl (8), so that the directions of move of the objects (11) between the outlet of the vibratory bowl (8) and the inlet of the crosshead (14) are perpendicular to each other, said crosshead having an inlet intended to be arranged at the outlet of the vibratory bowl, the objects (11) falling down into said crosshead being at least initially led by gravity into said crosshead, said crosshead having a guiding means formed of two parallel flanges (3, 5) separated by a free space in which the tail of the object (11) can circulate, the head of the object (11) sliding on the upper face of said two flanges, and **in that** the crosshead (14) includes at least one head slide (7) including at least one blade (7') of head slide (7), said blade being over at least one part of its path parallel to the flanges.

13. The crosshead (14) according to claim 12, **characterized in that** it includes two lateral walls (2, 4).

14. The crosshead (14) according to claim 12 or 13, **characterized in that** it is further intended to be arranged in continuity of and integral with a downstream vibratory conveyor means (12) so as to transfer thereto the objects (11), the crosshead (14) including means (1) for the fixation to the downstream vibratory conveyor means (12).
